# EUROPEAN PATENT APPLICATION

(11) **EP 0 573 153 A2**
(43) Date of publication of application: **08.12.1993**
(21) Application number: 93303648.5
(22) Date of filing: 11.05.1993
(51) Int. Cl.: G06F 15/72

(54) **Apparatus and method for converting line segment data to three-dimensional data**

(30) Priority: 05.06.1992 JP 169997/92
(71) Applicant: International Business Machines Corporation, Armonk, N.Y. 10504 (US)
(72) Inventor: Minamikata, Hiroshi, Tokyo (JP)
(74) Representative: Burt, Roger James, Dr.

(57) **Abstract**

A line segment of two-dimensional data is input through an input device 1 such as a mouse, and is then temporarily stored in a storage device 10 as well as being displayed on a two-dimensional display screen 2a. The line segment of two-dimensional data is converted to three-dimensional data when it obtains information in the depth direction based on its relationship to another line segment that constitutes a 3D graphics and has three-dimensional data already. Three-dimensional data of line segments that have that data in addition to two-dimensional data are stored in a storage device 7, and are projected by a projection conversion circuit 11 onto a two-dimensional projection plane that has been set by a visual field input device 8, so as to be converted to two-dimensional data, which are then displayed on the display screen 2a. Therefore, the line segments that have already been converted to three-dimensional data are displayed on the display screen 2a together with the line segments that have been input through the input device 2 and still have only two-dimensional data. An operator can construct a 3D graphics constituted of three-dimensional line segments simply by inputting two-dimensional line segments as if he were sketching. This provide an apparatus and method in which an operator can input a three-dimensional graphics to a graphic system by performing an operation that is as if he were sketching on a paper surface.

## Description

The present invention relates to an apparatus and method for converting two-dimensional line segment data that is input through a two-dimensional input device such as a mouse or tablet to three-dimensional data to facilitate the construction of a 3D (three dimensional) wire frame graphics. on a two-dimension display device such as a CRT.

Due to the absence of information in the depth direction, conventional apparatus including a two-dimensional input device and a two-dimensional display device can allow direct graphic input of a three-dimensional wire frame graphics to an apparatus.

However, conventional data processing using a computer can produce a three-dimensional wire frame graphics and display it on a two-dimensional display screen in the case where coordinate data for each of the line segments (i.e., its end points) that constitute the graphics are three-dimensionally specified. Three-dimensional graphics can be input to a computer by entering the three-dimensional coordinates of its vertices from a keyboard in the form of numerical values, or by using a three-plane diagram three views of the graphics are separately input in a graphic manner and thereafter indicating corresponding points among the views.

In the former method, however, mistakes can occur. The latter method has the problem that errors are likely to occur in indicating the corresponding points. It is also cumbersome to draw a plurality of views of the same object as viewed from different directions.

There is known a method in which a three-dimensional line segment to be drawn is input to an apparatus by inputting its coordinates along reference three-dimensional coordinate axes (Agui, et al., "Solid Object Input System by Conformal Projection Method," Transactions of Information Processing Society of Japan, January 1987, Vol. 28, No. 1). However, in this method, three-dimensional coordinates are simply input in a graphic manner, and the line segment still cannot be drawn (i.e., displayed) without provision of all the three-dimensional coordinates.

Another method is known in which the inputting is performed such that a plane is specified in a three-dimensional space and made to have a one-to-one correspondence with coordinates of a two-dimensional plane for the inputting (E. Sittas, "3D Design Reference Framework", Computer-Aided Design, 1991, pp. 380-384). However, this method is associated with the problem of cumbersome input operation because a plane must be defined before each input of a line segment.

In accordance with the present invention, there is now provided apparatus for converting two-dimensional line segment data to three-dimensional data, characterized by means for storing two-dimensional line segment data, means for storing a line segment of three-dimensional data, means for converting three-dimensional line segment data to two-dimensional data by projecting three-dimensional line segment data onto a two-dimensional projection plane; and means for converting said stored two-dimensional line segment data to three-dimensional data based on its relationship to a line segment that has three-dimensional data and has been converted to two-dimensional data.

The present invention thus provides an apparatus and method in which, when a three-dimensional graphics is input to a graphic device, it can be input and displayed in a way that the designer feels as if he were sketching it on a paper surface.

Viewing a second aspect of the present invention, there is provided a method for converting two-dimensional line segment data to three-dimensional data, comprising the steps of converting three-dimensional line segment data to two-dimensional data by projecting three-dimensional line segment data onto a two-dimensional projection plane, and converting new two-dimensional line segment data to three-dimensional data based on its relationship to a line segment that has three-dimensional data and has been converted to two-dimensional data.

The present invention can thus display, in a mixed state, line segments having only two-dimensional data together with line segments which also have three-dimensional data on a display screen with a two-dimensional coordinate system, and enable the designer to input respective line segments to construct a three-dimensional graphics while looking at the line segments being displayed, to thereby realize the figure drawing which suits the designer's sense.

Viewing a third aspect of the present invention, there is provided two-dimensional line segment display apparatus for two-dimensionally displaying line segments of two-dimensional data together with line segments having three-dimensional data, characterized by display means having a display screen with a two-dimensional coordinate system, projection conversion means for converting three-dimensional line segment data to two-dimensional data by projecting three-dimensional line segment data onto a two-dimensional projection plane means for displaying on said display screen a line segment that has been converted to two-dimensional data by the projection conversion means, and second means for displaying on said display screen a line segment that has been input as two-dimensional data.

Further, the present invention thus enables, at any time, the rotation and enlargement/reduction of graphics being drawn to obtain the orientation suitable for ease in drawing, and enables a designer to perform the input operation while properly recognizing the solid graphics that is being constructed.

Viewing a fourth aspect of the present invention, there is provided a two-dimensional line segment display method for two-dimensionally displaying line segments of two-dimensional data together with line segments having three-dimensional data, comprising the steps of, converting three-dimensional line segment data to two-dimensional data by projecting three-dimensional line segment data onto a two-dimensional projection plane, displaying on a display screen with a two-dimensional coordinate system a line segment that has been converted to two-dimensional data by projection conversion, and displaying a new line segment of two-dimensional data on said display screen.

Viewing a fifth aspect of the present invention, there is provided apparatus for converting two-dimensional line segment data to three-dimensional data, characterized by, display means having a display screen with a two-dimensional coordinate system, input means for inputting two-dimensional line segment data, means for storing input two-dimensional line segment data, means for displaying a line segment of two-dimensional data on said display screen, means for storing three-dimensional line segment data, means for converting three-dimensional line segment data to two-dimensional data by projecting three-dimensional line segment data onto a two-dimensional projection plane, means for displaying on said display screen a line segment that has been converted to two-dimensional data by projection conversion; and means for converting said two-dimensional line segment data to three-dimensional data based on its relationship to a line segment that has three-dimensional data and has been converted to two-dimensional data.

Viewing a sixth aspect of the present invention there is provided a method for converting a line segment of two-dimensional data to three-dimensional data, characterized by steps of; storing two-dimensional line segment data; displaying a line segment of two-dimensional data on a display screen with a two-dimensional coordinate system; converting three-dimensional line segment data to two-dimensional data by projecting three-dimensional line segment data onto a two-dimensional projection plane; displaying on said display screen a line segment that has been converted to two-dimensional data by projection conversion; converting said two-dimensional line segment data to three-dimensional data based on its relationship to a line segment that has three-dimensional data and has been converted to two-dimensional data; and storing line segment data that has been converted to three-dimensional data.

According to the invention as summarized above, a designer can draw a 3D graphics while inputting two-dimensional line segment data and while recognizing them as three-dimensional line segments visually and interactively.

When the position in three-dimensions of an input line segment of two-dimensional data is not determined and therefore it cannot be converted to three-dimensional data, the input line segment is left as it is and is afterwards automatically converted to three-dimensional data upon determination of its position in three-dimensions based on its relationship to a newly added line segment. That is, the system according to the invention edits a wire frame 3D graphics while displaying, in a mixed state, line segments of two-dimensional data, until they are converted to three-dimensional data, together with other line segments which have three-dimensional data.

If a means or a step that is capable of arbitrarily setting the two-dimensional projection plane to be used for projection-converting three-dimensional line segment data to two-dimensional data is further provided in the invention as summarized above, line segments that have been specified three-dimensionally can be displayed on the two-dimensional display screen with an arbitrary orientation and size.

An embodiment of the present invention will hereinafter be described with reference to the accompanying drawings in which:
Figure 1 is a view of an appearance of an apparatus for performing conversion to three-dimensional data;
Figure 2 is a block diagram showing a functional configuration of the apparatus for performing conversion to three-dimensional data;
Figure 3 is a flowchart of a process for performing conversion to three-dimensional data;
Figure 4 is an another flowchart of the process for performing conversion to three-dimensional data;
Figure 5A is a schematic diagram illustrating a relationship between line segments;
Figure 5B is a schematic diagram illustrating another relationship between line segments;
Figure 5C is a schematic diagram illustrating still another relationship between line segments;
Figure 6 is a schematic diagram showing a display screen;
Figure 7 is a schematic diagram showing a display screen;
Figure 8 is a schematic diagram showing a display screen;
Figure 9 is a schematic diagram showing a display screen;
Figure 10 is a schematic diagram showing a display screen;
Figure 11 is a schematic diagram showing a display screen;
Figure 12 is a schematic diagram showing a display screen;
Figure 13 is a schematic diagram showing a display screen;
Figure 14 is a schematic diagram showing a display screen;
Figure 15 is a schematic diagram showing a display screen;
Figure 16 is a schematic diagram showing a display screen;
Figure 17A is a schematic diagram illustrating a state in which a three-dimensional line segment is displayed two-dimensionally;
Figure 17B is a schematic diagram illustrating another state in which the three-dimensional line segment is displayed two-dimensionally; and
Figure 17C is a schematic diagram illustrating still another state in which the three-dimensional line segment is displayed two-dimensionally.

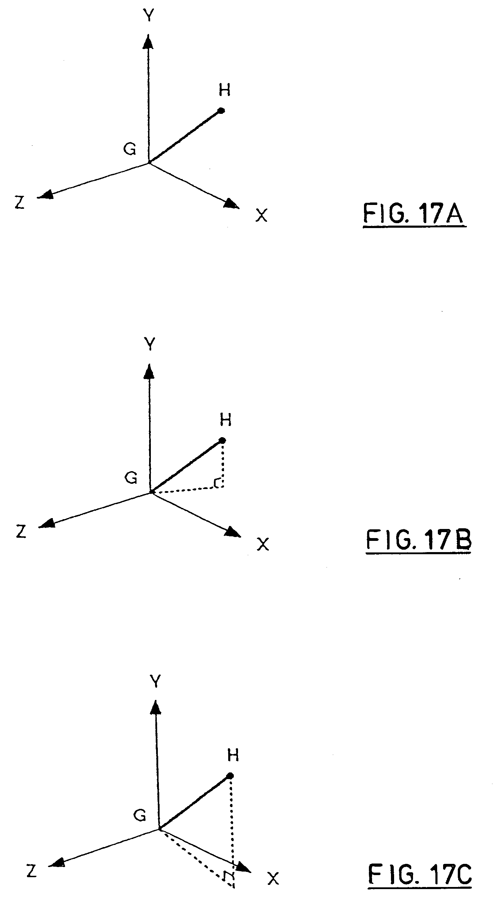

Referring to Figure 17A, in the case of inputting a line segment GH as a three-dimensional line segment with an end point G selected as the origin and displaying it on a two-dimensional plane (in this case, the paper surface of the figure), the line segment GH can be specified as a three-dimensional line segment having three-dimensional data if the position of the other end point H is determined as three-dimensional data. However, since the position of the end point H cannot be determined three-dimensionally due to the absence of information in the depth direction, the line segment GH cannot be specified three-dimensionally; that is, it may be the line segment shown in Figure 17B or Figure 17C, or one in another position. That is, a 3D graphics constructing apparatus cannot specify the 2D (two dimensional) line segment GH as a three-dimensional line segment by data processing.

When a designer sketches a three-dimensional object on, for example, a paper surface using a writing instrument, he recognizes, using his own senses, the three-dimensional position of a line segment like the above line segment GH (i.e., end point H) even if it has not been determined, and, as the sketch progresses, he establishes the position of a line segment that has not yet been specified three-dimensionally based on its relationship to later-drawn line segments. In this manner, he can draw a three-dimensional object image consisting of line segments whose positions are three-dimensionally determined as a whole.

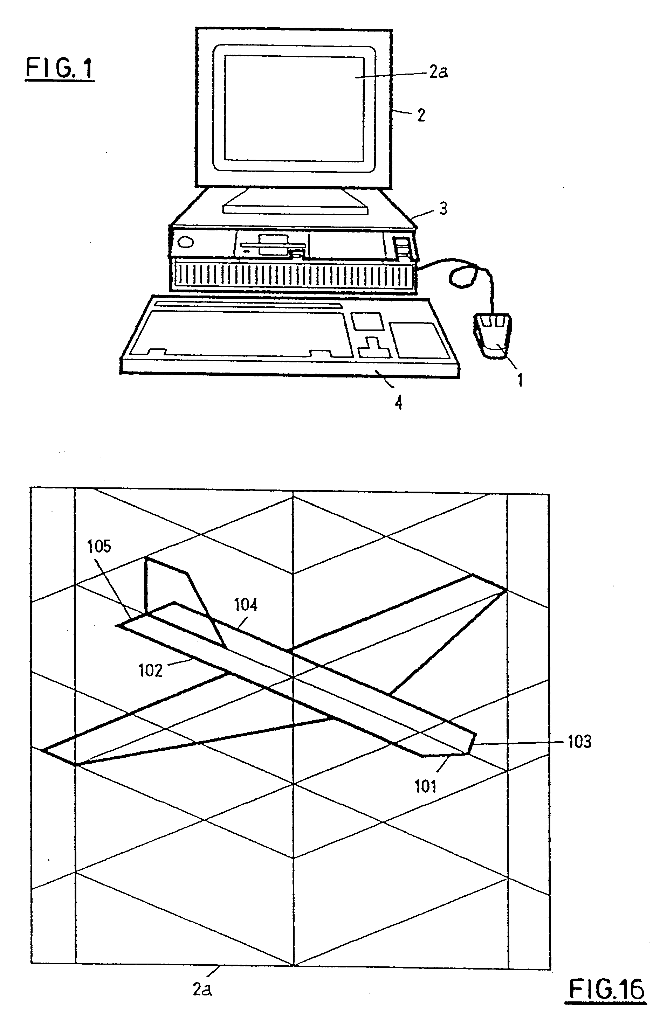

As shown in Figure 1, an apparatus according to an embodiment for performing conversion to three-dimensional data is constituted of a mouse 1 as a two-dimensional input means, a CRT display 2 as a display means, a personal computer 3 for performing various data processing operations, and a keyboard 4 as an auxiliary input means.

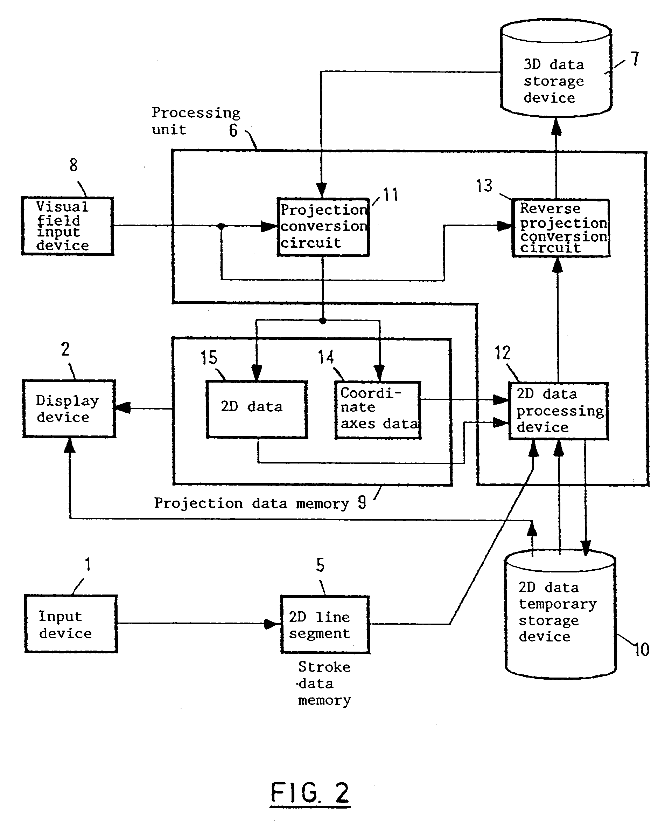

Figure 2 shows an internal configuration of the above conversion apparatus, which mainly consists of the following components: a stroke data memory 5 which stores stroke data (i.e., the two-dimensional data of a line segment) that is input through the mouse 1; a processing unit 6 which is described later; a 3D data storage device 7 which stores three-dimensional line segment data that is determined by the processing unit 6; a projection data memory 9 which stores two-dimensional coordinates that are obtained by a projection conversion circuit 11 which performs parallel projection of the above three-dimensional data; a 2D data storage device 10 which temporarily stores two-dimensional data (stroke data) that has not yet been converted to three-dimensional data; a display device 2 which displays respective line segments on its display screen 2a with a two-dimensional coordinate system based on data provided from the projection data memory 9 and the 2D data storage device 10.

The processing unit 6 consists of a projection conversion circuit 11 for converting the three-dimensional data of a line segment stored in the 3D data storage device 7 to two-dimensional data by parallel projection, a 2D data processing device 12 for examining the relationship between the two-dimensional data of a line segment after it is subjected to the projection conversion and the stroke data of a newly input line segment, and a reverse projection conversion circuit 13 for converting the two-dimensional data of a line segment to three-dimensional data.

A visual field input device 8 inputs various parameters for defining the two-dimensional projection plane for the projection conversion circuit 11. Based on these parameters, the two-dimensional projection plane, which is used as a reference when the projection conversion circuit 11 converts three-dimensional data to two-dimensional data by parallel projection, is set arbitrarily. In this embodiment, the visual field input device 8 is constituted of the mouse 1.

The projection data memory 9 consists of a memory 14 for storing the directions of three-dimensional coordinate axes as converted to two-dimensional data by the projection conversion circuit 11, and a memory 15 for storing the projection coordinates of a three-dimensional line segment as converted to two-dimensional data by the projection conversion circuit 11. That is, the projection data memory 9 stores two-dimensional coordinates that are obtained by parallel-projecting three-dimensional coordinates onto the two-dimensional projection plane that is set by the visual field input device 8.

Line segments that are read out from the projection data memory 9 and displayed on the display screen 2a of the display device 2 form an image as viewed in the visual field of the two-dimensional projection plane that is set by the visual field input device 8. On the other hand, line segments that are read out from the two-dimensional data temporary storage device 10 and displayed on the display screen 2a of the display device 2 are based only on the two-dimensional data that is input through the input device 1 by an operator who recognizes the display screen 2a as a reference two-dimensional plane. That is to say, the latter line segments form an image as drawn on the two-dimensional display screen 2a.

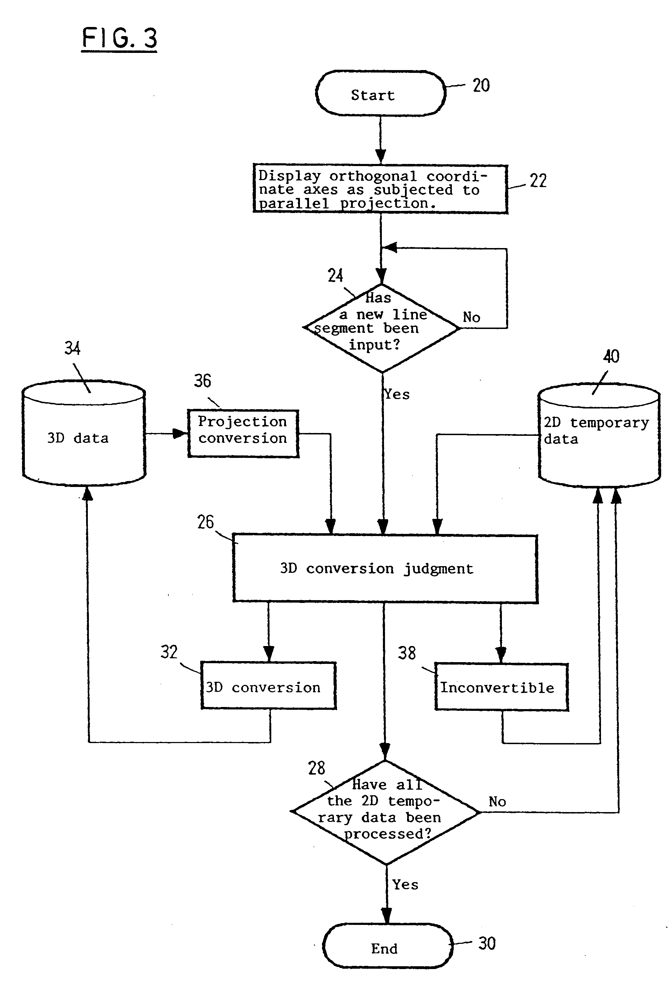

Referring to Figure 3, the operation of processing input data (i.e., stroke data of a line segment) is described, which operation is mainly performed by the 2D data processing device 12.

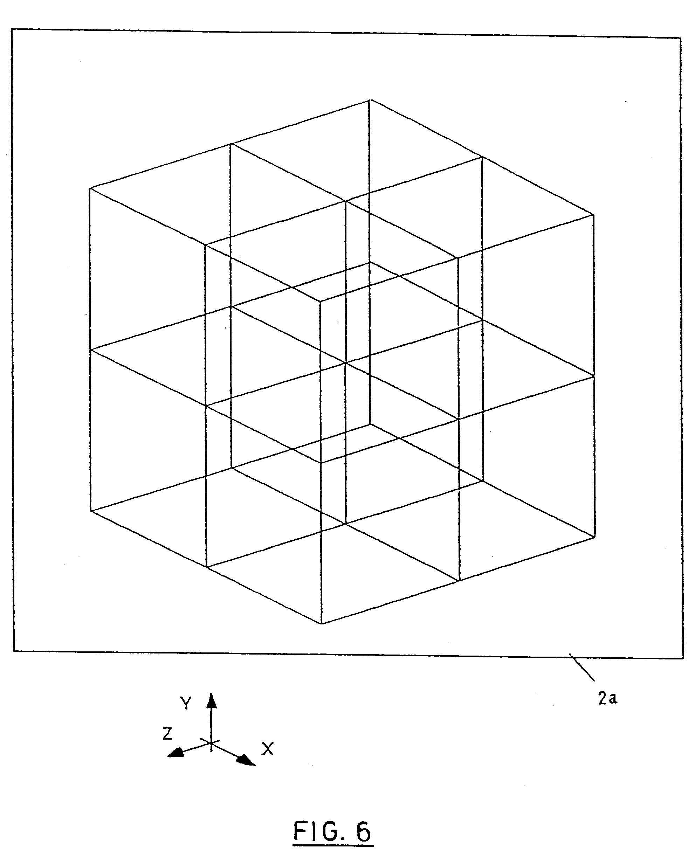

After performing various initial settings (step 20), three-dimensional orthogonal coordinate axes as parallel-projected onto the two-dimensional projection plane that has been set by the visual field input device 8 appear in an initial input screen of the display device 2 (step 22). For example, as shown in Figure 6, fundamental cubes, which are drawn on the basis of the parallel-projected three-dimensional orthogonal coordinate axes, are displayed to facilitate the recognition of spatial position.

When an arbitrary line segment is input as stroke data in the initial input screen using an input device 1 such as a mouse (step 24), it is judged whether this newly input line segment is convertible to three-dimensional data (step 26).

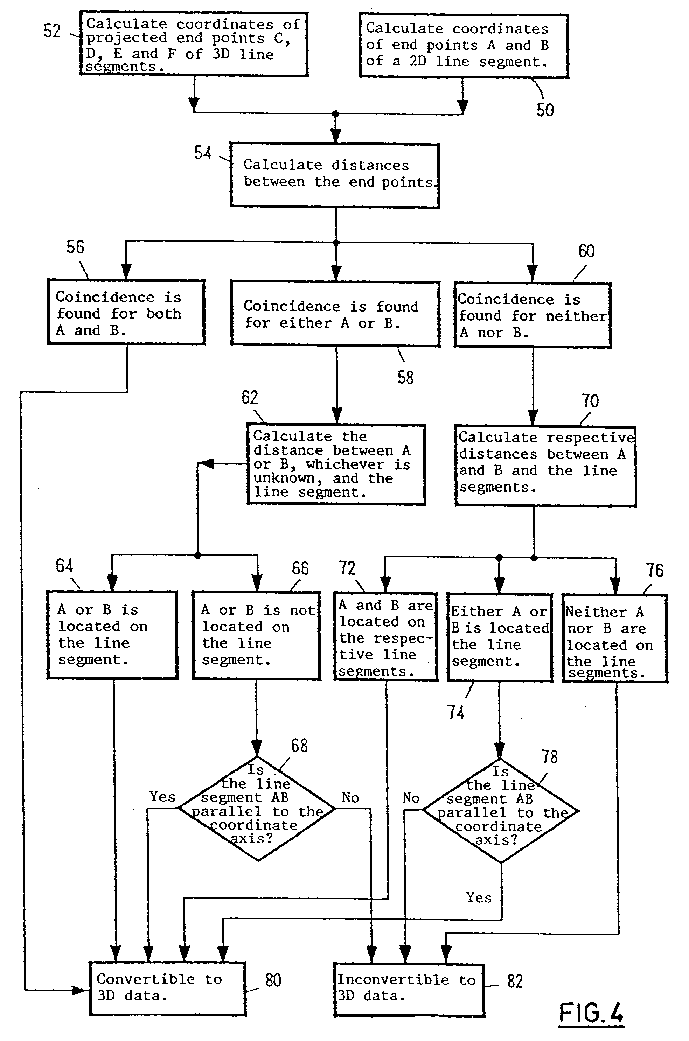

The 2D data processing device 12 judges whether the newly input line segment is convertible to three-dimensional data (step 26) using, as a clue, a line segment that has been obtained by converting, to two-dimensional data, the line segment data being stored in the 3D data storage device 7 as three-dimensional data (step 36). That is, it is judged whether information in the depth direction can be obtained with respect to the newly input line segment having only two-dimensional data (i.e., having no information in the depth direction, which is necessary to determine its position in terms of three-dimensional coordinates) based on another line segment that has already been specified as three-dimensional data, as described later with reference to Figure 4.

A line segment which has been judged to be convertible to three-dimensional data is converted by the reverse projection conversion circuit 13 to three-dimensional data (step 32), which is then stored into the 3D data storage device 7 (step 34).

On the other hand, a line segment which has been judged to be inconvertible to three-dimensional data (step 38) is temporarily stored in the two-dimensional data temporary storage device 10 until it becomes convertible to three-dimensional data based on a later input line segment which gives information in the depth direction to the temporarily stored line segment (step 40).

As described above, among the line segments that are input through the input device 1, line segments convertible to three-dimensional data are stored after conversion to three-dimensional data, and line segments inconvertible to three-dimensional data are stored as the original two-dimensional data. All the data thus stored in the data storage device 10 as original two-dimensional data are subjected to judgment as to their convertibility to three-dimensional data every time a new line segment is input (step 28).

With the series of operations for performing conversion to three-dimensional data as described above, as shown in Figure 2, the line segments that are stored in the projection data memory 9 after being read out from the 3D data storage device 7 and converted to two-dimensional data by the projection conversion circuit 11, and the line segments that are stored in the 2D data temporary storage device 10 and still associated only with two-dimensional data, are input to the display device 2 and displayed on the display screen 2a with a two-dimensional coordinate system such that the two kinds of line segments are mixed with each other.

In displaying these line segments, if the line segments having only temporary two-dimensional data and those having three-dimensional data are displayed using different colors, the operator can easily recognize the state of the 3D graphics being constructed, which will facilitate his input operation.

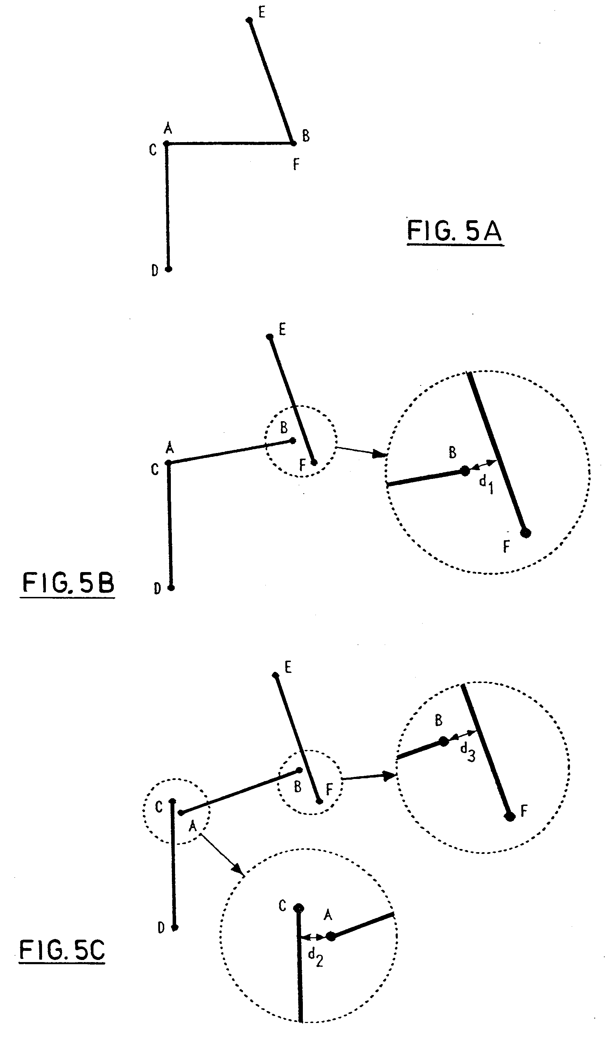

The judgment on the convertibility to three-dimensional data (step 26) is described below in more detail with reference to the flowchart of Figure 4 and the schematic diagram of Figure 5.

The judgment of whether a line segment AB that was input as stroke data and still has only two-dimensional data is convertible to three-dimensional data by adding information in the depth direction based on its relationship to line segments CD and EF that have been input before or after the line AB and that have been specified three-dimensionally and projection-converted to two-dimensional data for their display on the display device 2 is performed in the following manner. First, the two-dimensional coordinates of the end points A and B of the line segment AB (step 50) and, at the same time, the two-dimensional coordinates of the end points C, D, E and F of the line segments CD and EF are calculated (step 52).

Then, each of the distances between the end points A and B and the end points C, D, E and F are calculated (step 54), and based on the distances thus calculated the relationship between the line segments is judged. That is, if the distance is equal to zero or within a threshold value that can be regarded as zero based on a precision that can be set arbitrarily, the end points can be judged to be identical points. If the distance is larger than the threshold value, the end points are judged to be not identical.

As shown in Figure 5A, if the distance between the end point A of the line segment AB and the end point C of the line segment CD is within the threshold value, which means the end points A and C are identical, and if the end point B and the end point F of the line segment EF are within the threshold value, which means the end points B and F are identical (step 56), information in the depth direction can be added to each of the end points A and B based on the data of the end points C and F that have been specified in three dimensions. Therefore, the line segment AB is convertible to three-dimensional data by the reverse projection conversion circuit 13 (step 80).

On the other hand, as shown in Figure 5B, if only one end point of the line segment AB is identical to one end point of the line segments CD or EF (the end point A coincides with the end point C in Figure 5B; step 58), the distance dl between the other end point B of the line segment AB and the other line segment EF is calculated (step 62). Then, it is judged whether the distance d1 is within the above-mentioned threshold value. If the judgment is affirmative, the end point B is judged to be located on the line segment EF (step 64). Therefore, information in the depth direction can be added to the end point B based on the data for the line segment EF, which has been specified three-dimensionally, to determine its position in three-dimensions. It is concluded that the line segment AB, whose end points A and B can be specified three-dimensionally, is convertible to three-dimensional data (step 80).

In contrast to the above case, if the distance d1 is larger than the threshold value, it is judged that the end point B is not located on the line segment EF (step 66). In this case, it is further judged whether the line segment AB is parallel to one of the three-dimensional coordinate axes that are stored in the coordinate axes data memory 14 after being converted to two-dimensional data (step 68). An arbitrary line segment that is parallel to one of the three-dimensional coordinate axes can be specified three-dimensionally if the position in three-dimensions of one of its end points is determined. Therefore, if the line segment AB is parallel to one of the three-dimensional coordinate axes, it is judged that the two-dimensional data of the line segment AB is convertible to three-dimensional data (step 80). If the line segment is not parallel to one of the three-dimensional coordinate axes, the two-dimensional data of the line segment AB is judged to be inconvertible to three-dimensional data (step 82), and is therefore stored in the two-dimensional data temporary storage device 10 without conversion.

Furthermore, as shown in Figure 5C, if neither of the end points of the line segment AB are identical to the end points of the line segments CD and EF (step 60), the distance d2 between the end point A of the line segment AB and the line segment CD and the distance d3 between the end point B and the line segment EF are calculated (step 70). Then, it is judged whether each of the distances d2 and d3 is within the threshold value. If both distances are within the threshold value, it is judged that the end points A and B are located on the line segments CD and EF, respectively (step 72). It is concluded that the line segment AB is convertible to three-dimensional data (step 80).

On the other hand, if only one of the distances d2 and d3 is within the threshold value, one of the end points A and B is judged to be located on the line segment CD or EF (step 74). In the same manner as in the above case in which only one of the end points A and B is specified in three-dimensions, it is judged whether the line segment AB is parallel to one of the three-dimensional coordinate axes (step 78). If the judgment is affirmative, the line segment AB is judged to be convertible to three-dimensional data (step 80). If the judgment is negative, the line segment is judged to be inconvertible to three-dimensional data (step 82), and is therefore stored in the two-dimensional data temporary storage device 10 without conversion. Furthermore, if neither of the distances d2 and d3 are within the threshold value, it is judged that neither of the end points A and B are located on the line segments CD and EF, respectively (step 76). Since no information in the depth direction is added to the line segment AB from the data of the line segments CD and EF, the line segment AB is judged to be inconvertible to three-dimensional data (step 82), and is therefore stored into the two-dimensional data temporary storage device 10 without conversion.

Now, based on an example shown in Figs. 6-16, it is described how the 3D graphics of an airplane is constructed and displayed on the two-dimensional display screen 2a of the display device 2. In Figures 6-16, line segments that have been specified three-dimensionally are drawn by solid lines, and those not yet specified three-dimensionally, i.e., having only two-dimensional data, are drawn by dotted lines.

As shown in Figure 6, in the initial state, the three-dimensional coordinate axes as converted to two-dimensional data are displayed on the two-dimensional display screen 2a. In this example, the angles formed by the axes are drawn as deviating from 90Φ to properly display the axes three-dimensionally, and cubes having the axes as their edges are displayed to facilitate the recognition of the axes by an operator. Furthermore, for convenience in description, the X-, Y- and Z-axes are defined as shown in Figure 6.

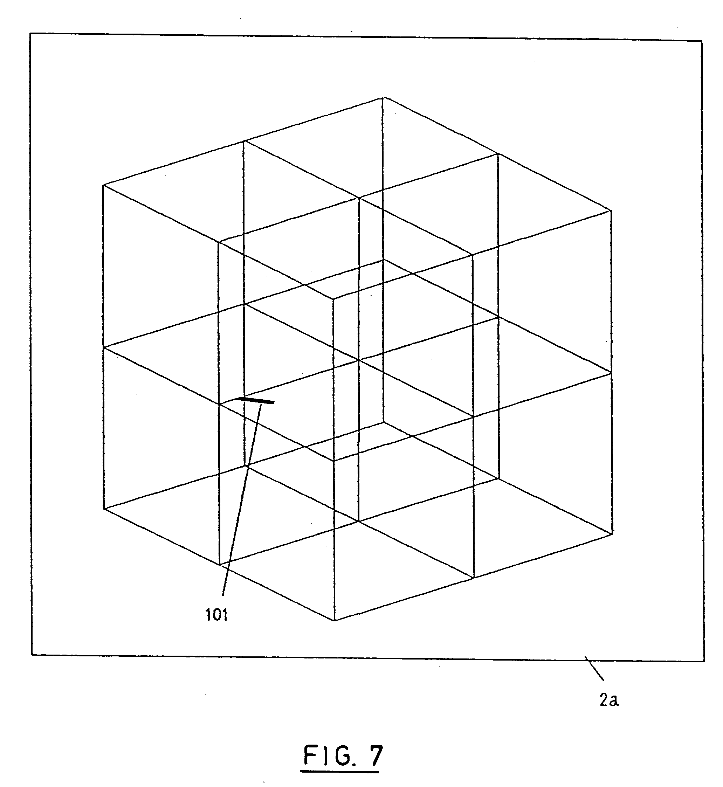

When a line segment 101 representing the left-side edge of the nose portion of the airplane is stroke-input using the mouse 1, it is displayed on the two-dimensional screen 2a as shown in Figure 7. The first-input line segment 101 is entirely two-dimensional data, and its position in three-dimensions is not determined yet. In this example, the first-input line segment 101 is implicitly defined as located in the plane of y = O by an input from the mouse 1 or keyboard 4, to make it a basis for the drawing. If the three-dimensional basis for the drawing is defined in the initial stage in this manner, line segments that are stroke-input thereafter can be specified three-dimensionally based on their relationship to the basis thus defined. However, in the invention, it is not always necessary to define the basis for the drawing in the initial stage in the above manner; line segments that have not been converted yet to three-dimensional data may be sequentially input to sketch a 3D graphics using these two-dimensional line segments and afterwards specified three-dimensionally by converting those to three-dimensional data based on their relationships to line segments that later acquire information in the depth direction.

In this example, by determining the plane that contains the line segment 101 in the above manner, the line segment 101 shown in Figure 7 is given two kinds of coordinates, i.e., three-dimensional coordinates that are produced according to reverse projection conversion by the reverse projection conversion circuit 13, and two-dimensional coordinates on the two-dimensional screen 2a in the visual field that are set by the visual field input device 8.

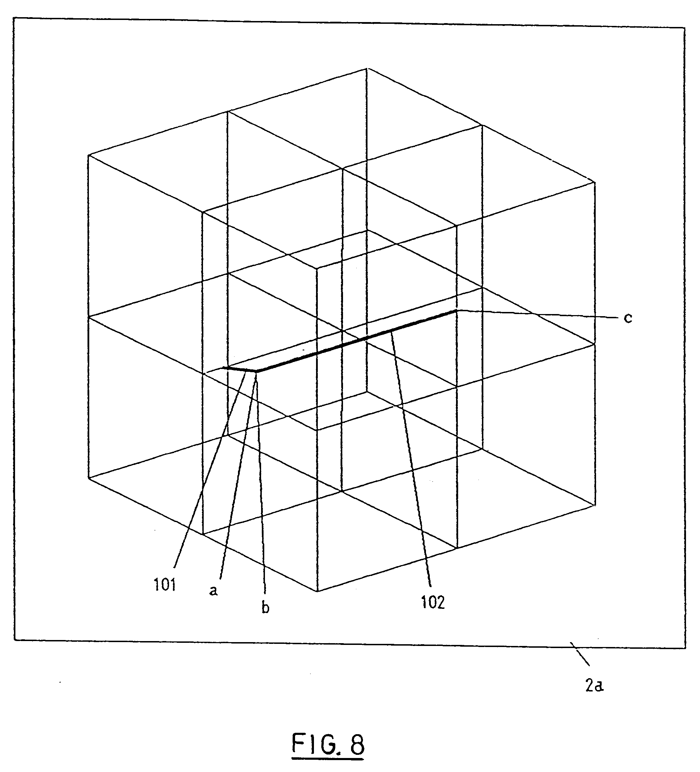

Then, as shown in Figure 8, a line segment 102 representing the left-side edge of the airplane is drawn onto the two-dimensional projection plane parallel to the line segment that is a projection of the Z-axis. If, on the two-dimensional display screen 2a, the end point b of the line segment 102 is drawn close enough to the end point a of the line segment 101 that their distance is within the threshold value, the two end points are regarded as the same point. Therefore, as described above, the three-dimensional position of the line segment 102 that is parallel to the coordinate axis and extends from the point a, whose position has been determined three-dimensionally, the three-dimensional coordinates of the other end point c of the line segment 102 are also determined.

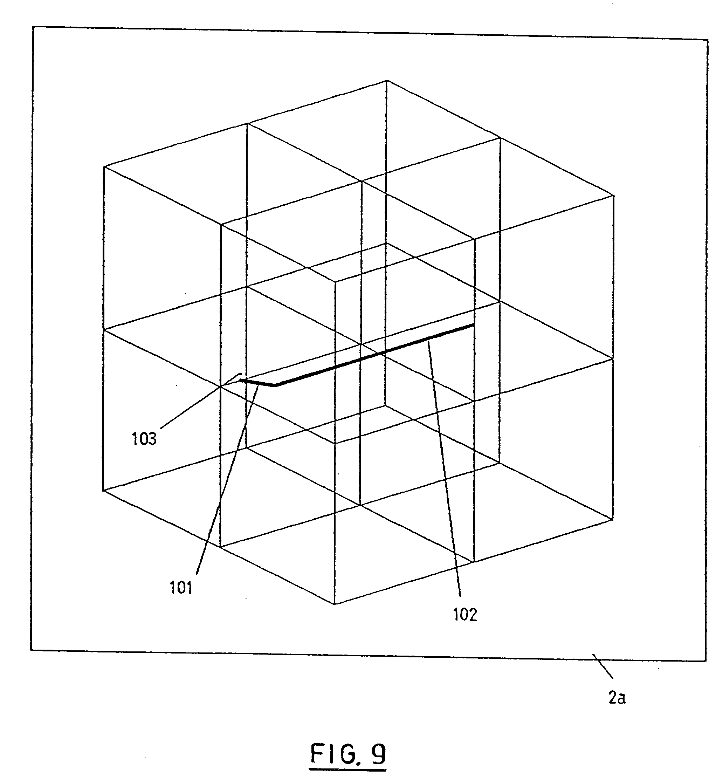

Then, as shown in Figure 9, a line segment 103 representing the right-side edge of the nose portion is input. While its one end point coincides with the end point of the line segment 101, the line segment 103 is not parallel to any projected line segment of the coordinate axes, which means that the position of the line segment 103 cannot be determined three-dimensionally. Therefore, the input line segment 103 is just stored temporarily in the two-dimensional data temporary storage device 10 in the form of the original two-dimensional data.

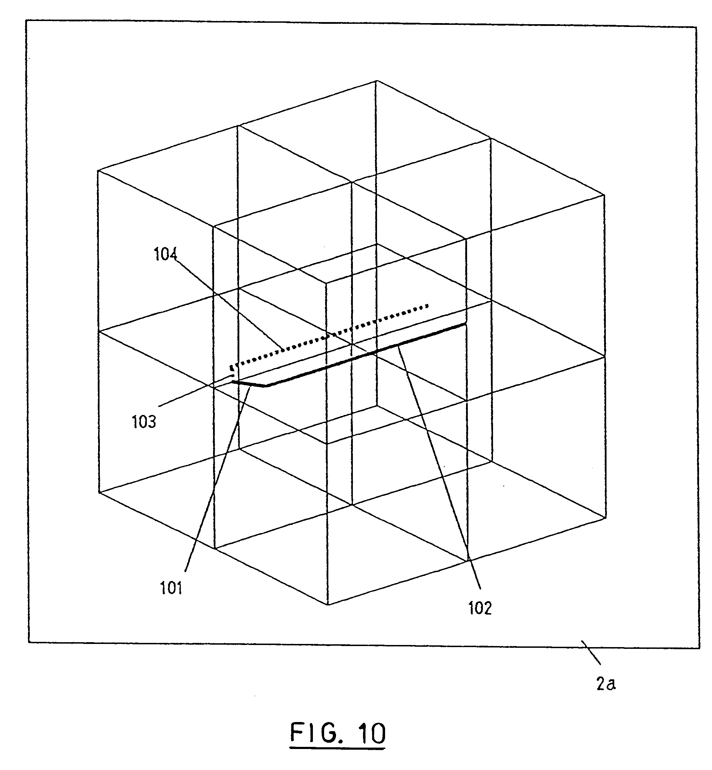

Next, as shown in Figure 10, a line segment 104 representing the right-side edge of the airplane is input. Since the line segment 104 is drawn so that it is connected to the line segment 103, which has only two-dimensional data, it is not given information in the depth direction. Therefore, being inconvertible to three-dimensional data, the line segment 104 is just stored temporarily.

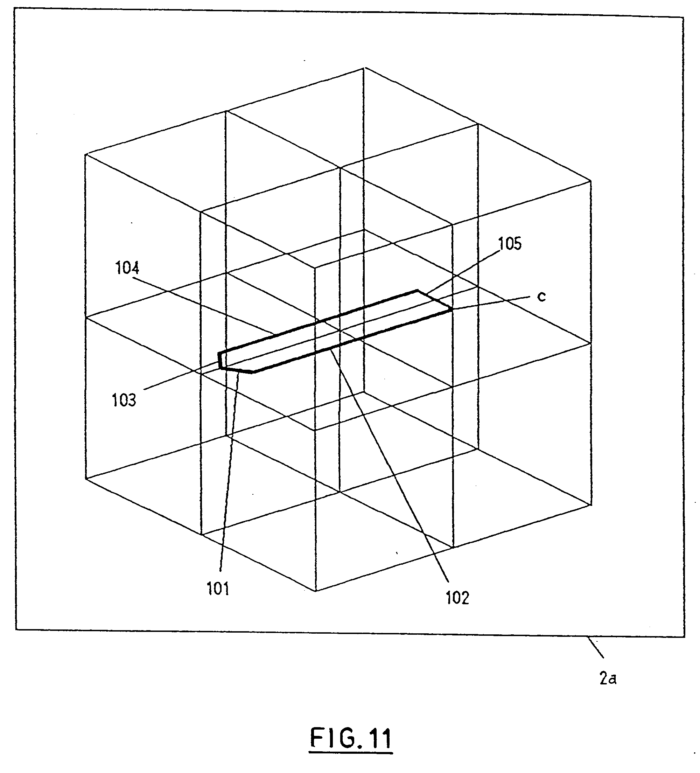

Then, as shown in Figure 11, a line segment 105 representing the rear end edge of the airplane is input. In this case, one end point of the newly added line segment 105 coincides with the end point c of the projected line segment 102 having three-dimensional data, and further, the line segment 105 is parallel to the projected line segment of the coordinate axis X. Therefore, as described above, the position of the line segment 105 is determined. When the line segment 105 is given three-dimensional coordinates, the data having only two-dimensional data, that are temporarily stored in the two-dimensional data temporary storage device 10, are reexamined as to whether they are convertible to three-dimensional data. Now that the three-dimensional coordinates of the line segment 105 have been determined, the three-dimensional coordinates of the line segment 104, which is connected to the line segment 105, and further, is parallel to the projected line segment of the Z-axis, are determined. Due to the determination of the three-dimensional coordinates of the line segment 104, the line segment 103 is rendered into a state in which its end points coincide with the corresponding end points of the line segments 101 and 104, which both have three-dimensional coordinates. Therefore, the three-dimensional coordinates of the two end points of the line segment 103 are determined, to give three-dimensional coordinates to the line segment 103.

In this manner, line segments that temporarily have only two-dimensional data can be given three-dimensional coordinates based on the information of a line segment added later. Therefore, the operator need not be aware of the three-dimensional coordinates of line segments every time they are drawn on the display screen 2a using the mouse 1 and, therefore, he can input and construct a three-dimensional graphics as he desires, as if he were sketching it on a paper surface.

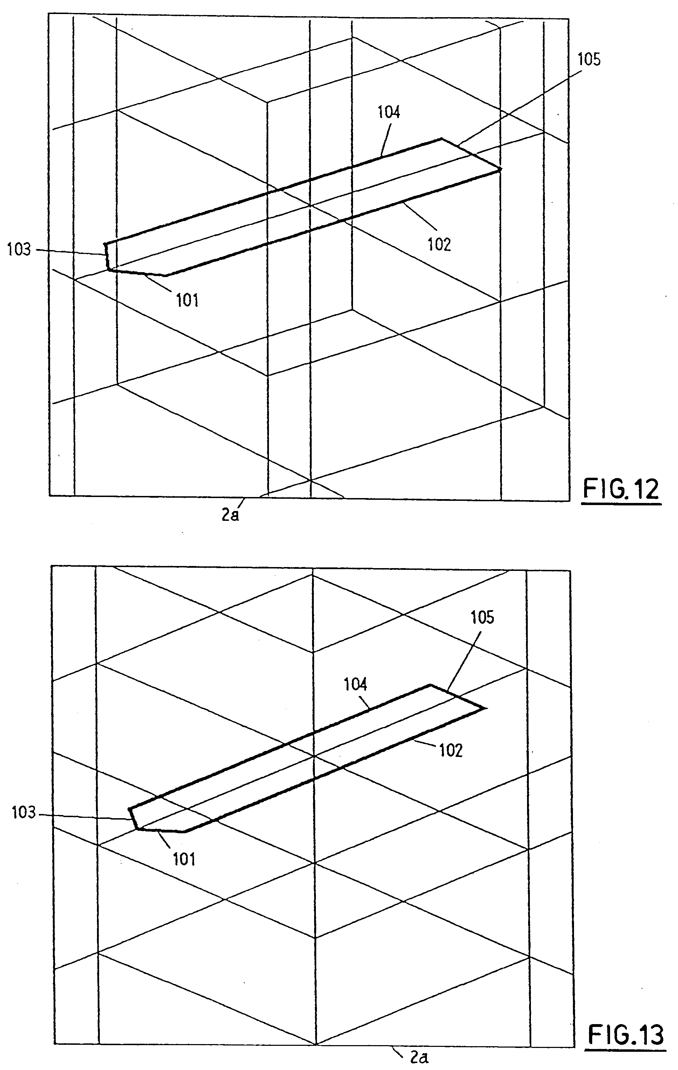

It is possible to enlarge a displayed graphics, as shown in Figure 12, by performing an enlarging operation on its three-dimensional data on the reference two-dimensional projection plane for parallel projection by changing the parameters provided to the visual field input device 8. It is also possible to rotate a displayed graphics, as shown in Figure 13, by rotating the reference two-dimensional projection plane, which is also done by changing the parameters provided to the visual field input device 8. With these operations, a display can be realized that can be easily recognized by an operator and can facilitate his drawing. In a similar manner, the reduction, translation, etc. of a displayed graphics can also be performed as desired.

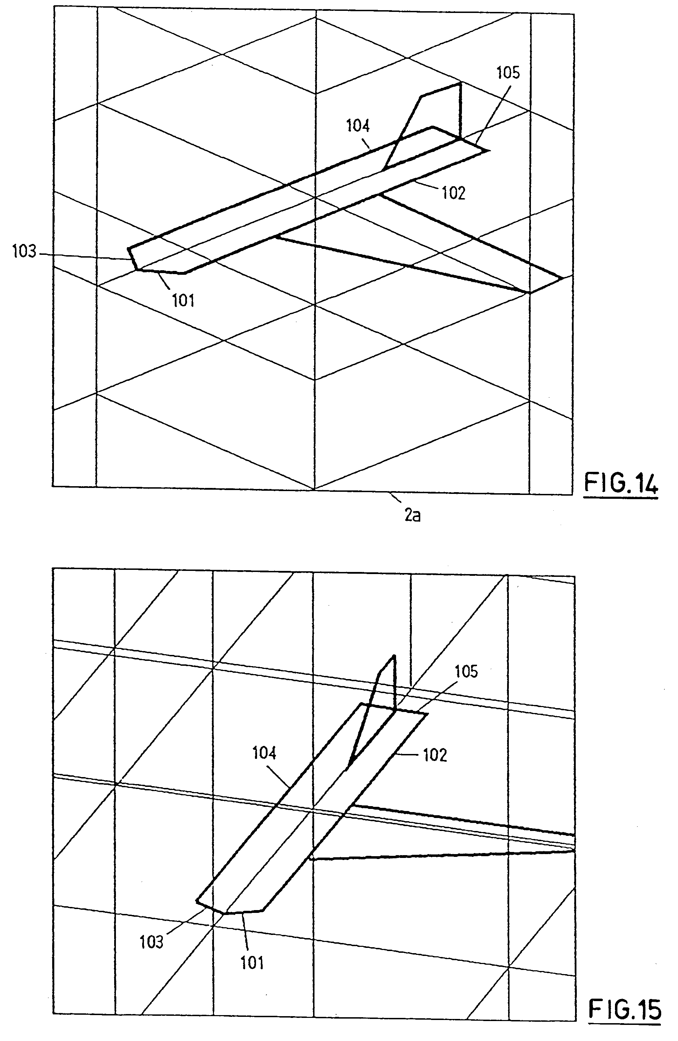

The fuselage portion of the airplane is drawn by the series of operations described above, and then the vertical tail plane and the main wings are drawn as shown in Figure 14 by performing operations similar to the above. In this case, it is possible to rotate the displayed graphics and move the view point upward, as shown in Figure 15, by rotating and changing the inclination of the reference two-dimensional projection plane by changing the parameters input from the visual field input device 8, which provides an operator with shape recognition along a variety of directions. The rotation of the displayed graphics can facilitate the drawing of reverse-side portions that are hidden in the original display. For example, the right-side main wing can be drawn more easily in the desired manner by rotating the displayed graphics, as shown in Figure 16.

According to the apparatus for performing conversion to three-dimensional data as described above, two-dimensional data and three-dimensional data are displayed in a mixed manner and the two-dimensional data can be converted to three-dimensional data when it is later given information in the depth direction, in contrast to the case where every line segment is input while determining its three-dimensional coordinates. Therefore, an operator need not be conscious of the three-dimensional coordinates; he can input a 3D graphics almost as if he were sketching it on a two-dimensional surface.

Although the above embodiment is described for the case of constructing a wire frame graphics consisting only of line segments, a wire frame graphics including line segments that curve in addition to line segments that are line segments of straight lines can also be an object. A line segment is uniquely specified by specifying its two end points. In the case of a line segment that curves, in addition to two end points, a formula describing the shape of the line segment between the two end points can be used as data for specifying the line segment, so that a curve smoothly connecting line segments adjacent to each other can be input.

As an application of the present invention, it is possible that in addition to adding line segments while rotating a graphics, the display screen 2a can be divided into a plurality of screens, i.e., multiple views to concurrently display projection views as viewed from a variety of view points, and arbitrary line segments can be added in a concurrent, parallel manner using the views with which an operator can draw those line segments most easily.

Furthermore, it is possible to draw a graphics such that a two-dimensional rough sketch etc. is saved in advance in a buffer for auxiliary lines, an idea sketch is superimposed on the displayed rough sketch, and the conversion to three-dimensional data is performed afterwards.

Furthermore, line segments can be input to construct not only a polyhedron as the external shape of an object or the ridge lines of, for example, a folded paper graphics, but also to construct the skeleton of a 3D graphics. The invention can further be applied, for example, to the construction of a frame or a rough sketch such as an external shape in the case of drawing a three-dimensional object, and to a three-dimensional arrangement support system.

In inputting a three-dimensional object, it is desired to provide an interface that is as natural as sketching. According to the technique of the invention, in which the parallel projection method is employed, three-dimensional line segments and curves can be input while they are recognized one by one visually and interactively using three orthogonal axes in space as clues. When it becomes difficult to continue the drawing of the object because of the existence of line segments being drawn too densely, the object can be rotated as desired to provide an orientation suitable for the drawing.

## Claims

**(1)** Apparatus for converting two-dimensional line segment data to three-dimensional data, characterized by:
means for storing two-dimensional line segment data;
means for storing a line segment of three-dimensional data;
means for converting three-dimensional line segment data to two-dimensional data by projecting three-dimensional line segment data onto a two-dimensional projection plane; and
means for converting said stored two-dimensional line segment data to three-dimensional data based on its relationship to a line segment that has three-dimensional data and has been converted to two-dimensional data.

**(2)** A method for converting two-dimensional line segment data to three-dimensional data, comprising the steps of:
converting three-dimensional line segment data to two-dimensional data by projecting three-dimensional line segment data onto a two-dimensional projection plane;
and converting new two-dimensional line segment data to three-dimensional data based on its relationship to a line segment that has three-dimensional data and has been converted to two-dimensional data.

**(3)** Two-dimensional line segment display apparatus for two-dimensionally displaying line segments of two-dimensional data together with line segments having three-dimensional data, characterized by:
display means having a display screen with a two-dimensional coordinate system;
projection conversion means for converting three-dimensional line segment data to two-dimensional data by projecting three-dimensional line segment data onto a two-dimensional projection plane;
means for displaying on said display screen a line segment that has been converted to two-dimensional data by the projection conversion means; and
second means for displaying on said display screen a line segment that has been input as two-dimensional data.

**(4)** A two-dimensional line segment display method for two-dimensionally displaying line segments of two-dimensional data together with line segments having three-dimensional data, comprising the steps of:
converting three-dimensional line segment data to two-dimensional data by projecting three-dimensional line segment data onto a two-dimensional projection plane;
displaying on a display screen with a two-dimensional coordinate system a line segment that has been converted to two-dimensional data by projection conversion; and
displaying a new line segment of two-dimensional data on said display screen.

**(5)** Apparatus for converting two-dimensional line segment data to three-dimensional data, characterized by:
display means having a display screen with a two-dimensional coordinate system;
input means for inputting two-dimensional line segment data;
means for storing input two-dimensional line segment data;
means for displaying a line segment of two-dimensional data on said display screen;
means for storing three-dimensional line segment data;
means for converting three-dimensional line segment data to two-dimensional data by projecting three-dimensional line segment data onto a two-dimensional projection plane;
means for displaying on said display screen a line segment that has been converted to two-dimensional data by projection conversion; and
means for converting said two-dimensional line segment data to three-dimensional data based on its relationship to a line segment that has three-dimensional data and has been converted to two-dimensional data.

**(6)** Apparatus as recited in any one of claims 1, 3 or 5
characterized by:
means capable of arbitrarily setting a two-dimensional projection plane for projection-converting three-dimensional line segment data to two-dimensional data.

**(7)** A method for converting a line segment of two-dimensional data to three-dimensional data,
characterized by steps of:
storing two-dimensional line segment data;
displaying a line segment of two-dimensional data on a display screen with a two-dimensional coordinate system;
converting three-dimensional line segment data to two-dimensional data by projecting three-dimensional line segment data onto a two-dimensional projection plane;
displaying on said display screen a line segment that has been converted to two-dimensional data by projection conversion;
converting said two-dimensional line segment data to three-dimensional data based on its relationship to a line segment that has three-dimensional data and has been converted to two-dimensional data; and
storing line segment data that has been converted to three-dimensional data.

**(8)** A method as recited in any one of claims 2, 4 or 7, comprising:
arbitrarily setting a two-dimensional projection plane for projection-converting three-dimensional line segment data to two-dimensional data.
